(19) **Europäisches Patentamt**
**European Patent Office**
**Office européen des brevets**

(11) **EP 1 220 771 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(51) Int Cl.:
***B60T 8/00*** *(2006.01)*

(21) Anmeldenummer: **01960628.4**

(86) Internationale Anmeldenummer:
**PCT/EP2001/009051**

(22) Anmeldetag: **03.08.2001**

(87) Internationale Veröffentlichungsnummer:
**WO 2002/012037 (14.02.2002 Gazette 2002/07)**

(54) **FAHRZEUGSTABILISIERENDE EINRICHTUNG**

DEVICE FOR STABILISING A MOTOR VEHICLE

SYSTEME DE STABILISATION DE VEHICULE

(84) Benannte Vertragsstaaten:
**DE FR IT**

(30) Priorität: **04.08.2000 DE 10038834**

(43) Veröffentlichungstag der Anmeldung:
**10.07.2002 Patentblatt 2002/28**

(73) Patentinhaber: **Continental Teves AG & Co. oHG**
**60488 Frankfurt am Main (DE)**

(72) Erfinder:
• **SCHNEIDER, Markus**
**65207 Wiesbaden-Auringen (DE)**

• **EL GUENAOUI, Fikri**
**60435 Frankfurt am Main (DE)**

(56) Entgegenhaltungen:
DE-A- 19 515 053      DE-A- 19 601 795
DE-A- 19 619 476      DE-A- 19 813 736
DE-A- 19 919 841

• **PATENT ABSTRACTS OF JAPAN vol. 017, no. 455 (M-1466), 20. August 1993 (1993-08-20) & JP 05 105048 A (NISSAN MOTOR CO LTD), 27. April 1993 (1993-04-27)**

EP 1 220 771 B1

**Beschreibung**

Die Erfindung betrifft eine fahrzeugstabilisierende Einrichtung zum Einstellen oder Modifizieren von Bremsdrücken in den Radbremsen einer Bremsanlage.

Um Fahrzeuginstabilitäten selbsttätig entgegenzuwirken sind eine Vielzahl von Fahrstabilitätsregelungen bekannt geworden. Unter dem Begriff Fahrstabilitätsregelung vereinigen sich mindestens vier Prinzipien zur Beeinflussung des Fahrverhaltens eines Fahrzeugs mittels vorgebbarer Drücke bzw. Bremskräfte in oder an einzelnen Radbremsen und mittels Eingriff in das Motormanagement des Antriebsmotors. Dabei handelt es sich um eine Bremsschlupfregelung (ABS), welche während eines Bremsvorgangs das Blockieren einzelner Räder verhindern soll, um eine Antriebsschlupfregelung (ASR), welche das Durchdrehen der angetriebenen Räder verhindert, um eine elektronische Bremskraftverteilung (EBV), welche das Verhältnis der Bremskräfte zwischen Vorder- und Hinterachse des Fahrzeugs regelt sowie um eine Giermomentregelung (ESP), welche für stabile Fahrzustände beim Gieren des Fahrzeugs um die Hochachse sorgt.

Mit Fahrzeug ist also in diesem Zusammenhang ein Kraftfahrzeug mit vier Rädern gemeint, welches mit einer hydraulischen, elektro-hydraulischen oder elektro-mechanischen Bremsanlage ausgerüstet ist. In der hydraulischen Bremsanlage kann mittels eines pedalbetätigten Hauptzylinders vom Fahrer ein Bremsdruck aufgebaut werden, während die elektro-hydraulischen und elektro-mechanischen Bremsanlagen eine vom sensierten Fahrerbremswunsch abhängige Bremskraft aufbauen. Im Folgenden wird auf eine hydraulische Bremsanlage bezug genommen. Jedes Rad besitzt eine Bremse, welcher jeweils ein Einlassventil und ein Auslassventil zugeordnet sind. Über die Einlassventile stehen die Radbremsen mit dem Hauptzylinder in Verbindung, während die Auslassventile zu einem drucklosen Behälter bzw. Niederdruckspeicher führen. Schliesslich ist noch eine Hilfsdruckquelle vorhanden, welche auch unabhängig von der Stellung des Bremspedals einen Druck in den Radbremsen aufzubauen vermag. Die Einlass- und Auslassventile sind zur Druckregelung in den Radbremsen elektromagnetisch betätigbar.

Zur Erfassung von fahrdynamischen Zuständen sind vier Drehzahlsensoren, pro Rad einer, ein Giergeschwindigkeitssensor, ein Querbeschleunigungssensor und ein Drucksensor für den vom Bremspedal erzeugten Bremsdruck sowie in bestimmten Fahrzeugkonfigurationen ein Längsbeschleunigungssensor vorhanden. Dabei kann der Drucksensor auch ersetzt sein durch einen Pedalweg- oder Pedalkraftsensor, falls die Hilfsdruckquelle derart angeordnet ist, dass ein vom Fahrer aufgebauter Bremsdruck von dem der Hilfsdruckquelle nicht unterscheidbar ist.

Bei einer Fahrstabilitätsregelung wird das Fahrverhalten eines Fahrzeugs derart beeinflusst, dass es für den Fahrer in kritischen Situationen besser beherrschbar wird. Eine kritische Situation ist hierbei ein instabiler Fahrzustand, in welchem im Extremfall das Fahrzeug den Vorgaben des Fahrers nicht folgt. Die Funktion der Fahrstabilitätsregelung besteht also darin, innerhalb der physikalischen Grenzen in derartigen Situationen dem Fahrzeug das vom Fahrer gewünschte Fahrzeugverhalten zu verleihen. Ein instabiles Fahrverhalten eines Fahrzeugs kann im Fall des Untersteuerns eintreten, bei dem die gemessene Gierwinkelgeschwindigkeit in der Weise von der zu erzielenden abweicht, dass das Fahrzeug sich nicht so stark in die Kurve hineindreht, wie erwartet.

Ein in diesem Fall von dem Giermomentenregler initiierter ESP Untersteuereingriff versucht das Fahrzeug durch einen Bremseneingriff am kurveninneren Hinterrad zu stabilisieren. Zum einen hat bei stationär mit starker Untersteuertendenz und hohem Querbeschleunigungsniveau durchfahrenen Kurven ein derartiger Untersteuereingriff durch die Normalkraftreduktion am kurveninneren Hinterrad jedoch nur eine begrenzte Wirkung. Da das Rad in diesem Fall wenig zur Seitenführung an der Hinterachse beiträgt und auch keine grossen Längskräfte übertragen kann, sind die durch einen Bremseneingriff an diesem Rad erzeugbaren Giermomente und damit die Stabilisierungswirkung relativ klein. Zum anderen ist die Seitenkraftreserve an der Hinterachse auf Niedrigstreibwert sehr klein. Daher kann es leicht zu einer Überkompensation durch den Untersteuerbremseneingriff kommen (Übersteuern), der das Fahrzeug destabilisiert.

Untersteuernde Fahrsituationen dieser Art entstehen, wenn der Fahrer bei Hochreibwertverhältnissen einen Lenkwinkel aufgrund des Kurvenverlaufs vorgibt bzw. vorgeben muß, dem das Fahrzeug bei der aktuellen Geschwindigkeit nicht folgen kann. Der eigentliche Grund für die in solchen Situationen von der ESP-Regelung erkannte untersteuernde Instabilität besteht also in einer dem Kurvenverlauf nicht angepassten Fahrzeuggeschwindigkeit und das durch sie bedingte hohe Querbeschleunigungsniveau. Durch den ESP-Untersteuereingriff wird zwar die Fahrzeuginstabilität durch die Einleitung eines Giermoments um die Fahrzeughochachse abgebaut, jedoch kann die Fahrzeuggeschwindigkeit durch die während des Eingriffs aufgebauten Bremskräfte nur begrenzt reduziert werden. Eine Verringerung der Untersteuertendenz wird jedoch erst dann erreicht, wenn durch die geringe Bremswirkung des Untersteuereingriffs und aufgrund der Verzögerung durch hohen Querschlupf die Fahrzeuggeschwindigkeit reduziert wurde. Dieser Zeitraum kann sich über mehrere Sekunden erstrecken

Es wäre daher wünschenswert, das Untersteuern des Fahrzeugs zum einen durch das Aufbringen eines Giermomentes und zum anderen durch eine Verzögerung des Fahrzeugs zu kompensieren.

Eine fahrzeugstabilisierende Einrichtung gemäß dem Oberbegriff von Anspruch 1 ist aus der DE 196 19 476 A1 bekannt.

Eine denkbare Lösung (UndersteerControlLogic) für das genannte Problem ist das Fahrzeug aktiv auf allen vier Rädern zu bremsen und das durch den Bremseneingriff am kurveninneren Hinterrad erzeugte Giermoment durch einen Druckabbau am kurvenäußeren Vorderrad zu unterstützen. Dieser Lösungsweg führt aus mehreren Gründen bei Fahrzeug Bremsanlagen mit diagonal geteilten Bremskreisen ohne Vorladung zu den folgenden Nachteilen:

**a.) Destabilisierung**

Im Gegensatz zu einem Fahrzeug mit Vorladung, bei dem der Bremsdruck mit Hilfe des aktiven Boosters eingestellt wird, müssen die Raddrücke mit Hilfe der Rückförderpumpe erzeugt werden. Daher kann es aufgrund von Streuungen der Pumpenförderleistungen in den beiden Kreisen zu unterschiedlichen Raddrücken kommen. In einem diagonal geteilten Fahrzeug können die dadurch entstehenden Giermomente das Fahrzeug destabilisieren.

**b.) Überbremsung**

Beim aktiven Druckaufbau über die Rückförderpumpe ist keine Information über den tatsächlichen Bremsdruck in der Radbremse vorhanden. Daher kann das in den Bremssätteln modellierte Druckniveau stark von der Sollvorgabe abweichen. Dies kann zu Komfortproblemen und im schlimmsten Fall zu einer Überbremsung der Hinterachse führen.

**c.) Einbremsen**

Wird mit Hilfe der Rückförderpumpe in allen Rädern die Solldruckvorgabe eingestellt, die aus der Fahrersollvorgabe (THZ-Druck) und den Druckanforderungen der überlagerten Regelkreise gebildet und entsprechend von einem unterlagerten Regelkreis unter Berücksichtigung von vorhandenen Sensorsignalen oder daraus abgeleiteten Grössen umgesetzt wird, werden im ungünstigsten Fall,wenn alle Einlassventile geschlossen sind, beide Kreise vom Hauptzylinder (THZ) entkoppelt (Brake by Wire). Daher muss eine sichere Einbremserkennung' gewährleistet sein, die in der standardmäßigen Hardwarekonfiguration mit einem Drucksensor und ohne redundantem Bremslichtschalter (BLS) nicht sicher gewährleistet ist.

Der Erfindung liegt die Aufgabe zugrunde, eine Stabilisierung des Fahrzeugs im Untersteuerfall durch zusätzliche Verzögerung zu verbessern.

Diese Aufgabe wird erfindungsgemäß durch eine Einrichtung gemäß Anspruch 1 gelöst.

Mit der vorstehend beschriebenen Erfindung sind die drei oben beschriebenen Probleme für diagonal geteilte Fahrzeuge ohne Vorladung gelöst.

**a.) Destabilisierung**

Wenn der aktive Druckaufbau auf die Vorderachse begrenzt bleibt, kann die Hinterachse immer die maximale Seitenführung übertragen. Damit ist eine Destabilisierung des Fahrzeugs durch den Bremseneingriff ausgeschlossen.

**b.) Überbremsung**

Der Druckaufbau ist auf die Vorderachse begrenzt. Damit ist keine Überbremsung der Hinterachse mehr möglich. Da man aus den freilaufenden Rädern an der Hinterachse die Fahrzeugverzögerung genau berechen kann, lässt sich das Komfortproblem durch eine Umstellung der Druckschnittstelle auf eine Verzögerungsschnittstelle erreichen.

**c.) Einbremsen**

Da in einem Fahrzeug mit einer Bremsanlage mit diagonal aufgeteilten Bremskreisen die Räder einer Seite unterschiedlichen Bremskreisen zugeordnet sind, lassen sich diese Räder mit ETR regeln. Eine besipielhafte ETR- Regelung (Umsachalt-/Trennventil-Regelung) ist in der DE 19919841.1 beschrieben. Damit kann der Fahrer auch bei nicht funktionierender Einbremserkennung immer in mindestens zwei Räder einbremsen (ungefähr 70% der insgesamt zur Verfügung stehenden Bremsleistung).

Vorteilhaft ist, dass die Bremsdrucksteuerung in Abhängigkeit von dem Untersteuer-Fahrzustand Signale für eine, ein Giermoment des Fahrzeugs bewirkende Druckanforderung nach einem Druckaufbau und Druckabbau der Bremsdrücke an der Vorderachse generiert und die entsprechenden Steuerbefehle an die Aktuatoren abgibt. Dadurch, dass die durch den Bremskraftaufbau/abbau erzeugte Längskraftdifferenz an der Vorderachse (optional der Seitenkraftabbau an der Hinterachse) dem Fahrzeug ein Giermoment nach Massgabe des Untersteuer-Fahrzustands einprägt, reduziert sich das instabile Fahrverhalten des Fahrzeugs unter Einhaltung von Fahrzeugstabilitätskriterien. Das Giermoment wird durch Modifikation eines fahrerunabhängig eingesteuerten Bremsdrucks aufgebaut, der nach Massgabe einer geeigneten Verteilung des Querbeschleunigungsniveaus eine erste Reduzierung der Fahrzeuggeschwindigkeit bewirkt. Dadurch, dass die den Differenzbremskraft bewirkenden Soll-Bremskräfte in Abhängigkeit von einer Fahrzeugsollverzögerung $\alpha_{Soll}$, die in Abhängigkeit von einer Regelabweichung $\Delta\dot\psi$, welche aus verfügbaren Sensorsignalen bzw. aus ihnen abgeleiteten Signale gebildet wird, die ein Maß für den Untersteuerzustand des Fahrzeugs sind und der Fahrzeuggeschwindigkeit $\nu$ ermittelt wird, und einem Offset $F_{\Delta\dot\psi}$ gebildet werden, wird vorteilhaft neben einer Verringerung der Untersteuertendenz durch die Bremswirkung des ESP Untersteuereingriffs zum Erzeugen des Giermoments, aufgrund der Bremswirkung nach Massgabe der Fahrzeugverzögerung eine Verringerung der Fahrzeuggeschwindigkeit durch Einbremsung an der Vorderachse erzielt.

Vorteilhaft ist, dass die Soll-Bremskräfte für die Vorderachse nach der Beziehung $F_{Soll} = \alpha_{Soll}$ f $\{\Delta\dot\psi, \nu, \alpha_{quer}, \delta\}$ gebildet werden, mit $F_{Soll}$ = Bremskraft an den Radbremsen der Vorderachse, $\alpha_{Soll}$ =Fahrzeugsollverzögerung, $\Delta_{\dot\psi}$=Maß für Untersteuertendenz des Fahrzeuges, $\nu$ = Fahrzeuggeschwindigkeit , $\alpha_{quer}$ = Querbeschleunigung, $\delta$ = Lenkradwinkel bzw. Lenkwinkel. Die Soll-Bremskraft an dem kurveninneren Vorderrad wird dabei nach der Beziehung $F_{Soll} = F_{\alpha} = \alpha_{Soll}$ f $\{\Delta\dot\psi, \nu, \alpha_{quer}, \delta\}$ und am kurvenäusseren Vorderrad nach der Beziehung $F_{Soll} = \alpha_{Soll}$ f $\{\Delta\dot\psi, \nu, \alpha_{quer}, \delta\}$- $F_{\Delta\dot\psi}$ gebildet mit $F_{\Delta\dot\psi}$ = Bremskraftdifferenzwert zwischen den Radbremsen der Vorderachse.

Vorteilhaft wird die Bremskraftanforderung für den Bremskraftaufbau am kurveninneren Vorderrad auf einen oberen Wert begrenzt, dem ein maximaler Schlupfbereich zugeordnet ist (Maximum der Schlupfkurve, d.h. maximal übertragbare Längskraft), bei dem die ABS Regelung aktiviert wird.

Am kurvenäußeren Vorderrad wird versucht die Kraftdifferenz $F_{\Delta\dot\psi}$ zu dem kurveninneren Vorderrad einzustellen. Wird bei dem Kraftaufbau an den Vorderrädern nach Maßgabe des Untersteuerregelbremsdruckes die aus der Bremskraftanforderung generierte Druckanforderung $P_{Soll}$ = f$\{F_{Soll}\}$ für den Druckaufbau am kurvenäußeren Vorderrad Null bar, d.h. kann die geforderte Bremskraftdifferenz an der Vorderachse nicht vollständig umgesetzt werden, erfolgt ein Bremskraftaufbau am kurveninneren Hinterrad nach Massgabe der Untersteuerregelbremskraft. Dabei wird die am kurvenäusseren Vorderrad nicht umsetzbare Bremskraftdifferenz $F_{\Delta\dot\psi}$ bzw. eine an den Vorderrädern nicht umsetzbare Teil- oder Restbremskraft von $F_{\Delta\dot\psi}$ an dem diagonal gegenüber liegenden Hinterrad eingesteuert.

Eine vorteilhaft ausgebildete Bremsanlage mit diagonal aufgeteilten Bremskreisen weist ein Umschalt- und ein Trennventil pro Bremskreis auf, wobei die Soll-Bremsdrücke über eine Ansteuerung der Umschalt- und/oder Trennventile in die Radbremsen eingesteuert werden.

Vorteilhaft weist die Einrichtung bzw. der Regler folgende Einheiten auf:

1. Eine Verzögerungseinheit,
die abhängig von der Regelabweichung und Fahrzeuggeschwindigkeit eine Verzögerungsanforderung generiert, die ein Verzögerungsregler mit Hilfe von Bremskraftanforderungen $F_a$ an der Vorderachse versucht umzusetzen (Verzögerung maximal bis zum Blockierdruck der Vorderräder, bei dem die ABS Regelung aktiv eingreift, möglich).

2. Eine Giermomenteneinheit,
die abhängig von der Regelabweichung das benötigte Giermoment berechnet, das dann durch den Aufbau einer Bremskraftdifferenz $F_{\Delta\dot\psi}$ zwischen beiden Vorderrädern erzeugt wird.

3. Eine Bremsdrucksteuerungseinheit, die die Bremskraftsollanforderungen $F_{Soll}$ entsprechend in Bremsdrücke umsetzt

Damit gestalten sich die Druckanforderungen an den beiden Vorderrädern folgendermaßen:

a) am kurveninneren Vorderrad wird versucht die Bremskraftanforderung $F_a$ des Verzögerungsreglers umzusetzen. Dabei können Bremskraftanforderungen, die über der maximal übertragbaren Längskraft $F_{block}$, d.h. über dem Blockierdruckniveau $P_{block}$ liegen, (=> ABS) nicht vollständig umgesetzt werden.

b) am kurvenäußeren Vorderrad wird versucht die Bremskraftdifferenz $F_{\Delta\dot\psi}$ zu dem kurveninneren Rad einzustellen, d.h. die Solldruckanforderung berechnet sich hier zu:

$F_a$ - $F_{\Delta\dot\psi}$; wenn $F_a$ unter dem Blockierdruckniveau liegt $F_{Block}$-$F_{\Delta\dot\psi}$; wenn $F_a$ über dem Blockierdruckniveau liegt

c) Kann die geforderte Bremskraftdifferenz an der Vorderachse nicht vollständig umgesetzt werden, d.h. $F_{\Delta\dot\psi}$ ist größer als $F_a$ bzw. $F_{Block}$ wird die Druckanforderung am kurvenäußeren Vorderrad zu null. In diesem Fall wird versucht das restliche benötigte Giermoment durch einen Bremseneingriff am kurveninneren Hinterrad umzusetzen.

Vorteilhafte Weiterbildungen sind in den Unteransprüchen angegeben.

Im Weiteren werden die Ausdrücke Bremskraft und Bremsdruck im gleichen Kontext verwendet, da Bremskraft und Bremsdruck miteinander korreliert sind $F_\alpha = f\{P_\alpha\}$.

Ein Ausführungsbeispiel ist in der Zeichnung angegeben und wird im Folgenden näher beschrieben.

Es zeigen

Fig. 1   eine schematische Darstellung eines Fahrzeugs mit ESP-Regelungssystem, Bremsanlage, Sensorik und Kommunikationsmöglichkeiten

Fig.2   eine schematische Darstellung einer hydraulischen Bremsanlage

Fig.3   eine schematische Darstellung der Bremskraftverteilung im Untersteuerfall

Fig.4   eine schematische Blockdiagramm der einzelnen Komponenten

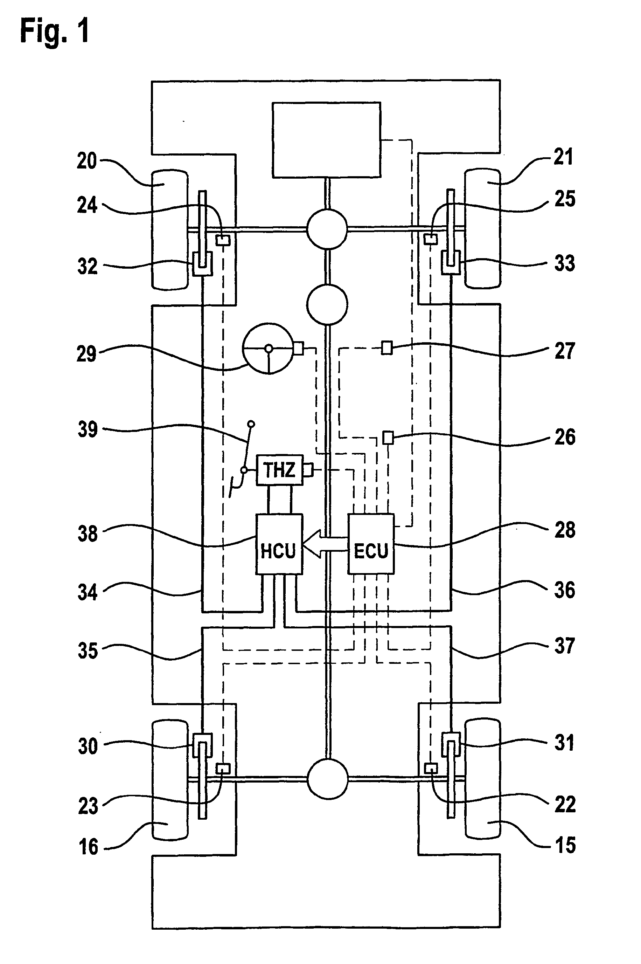

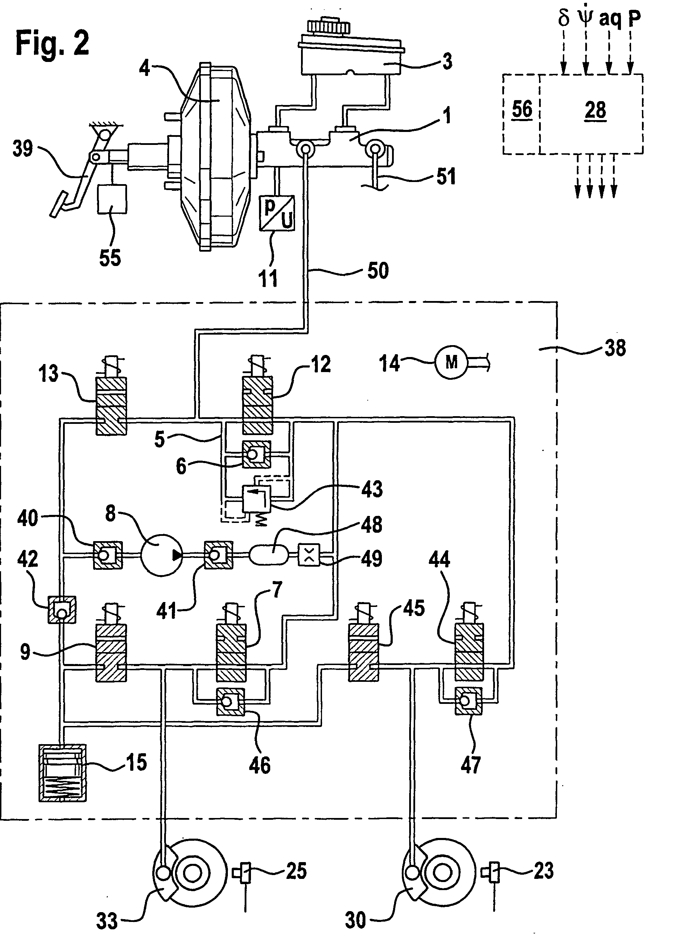

In der Figur 1 ist ein Fahrzeug mit ESP-Regelungssystem, Bremsanlage, Sensorik und Kommunikationsmöglichkeiten schematisch dargestellt. Die vier Räder sind mit 15, 16, 20, 21 bezeichnet. An jedem der Räder 15, 16, 20, 21 ist je ein Radsensor 22 bis 25 vorgesehen. Die Signale werden einer Elektronik-Regeleinheit 28 zugeführt, die anhand vorgegebener Kriterien aus den Raddrehzahlen die Fahrzeuggeschwindigkeit $v_{Ref}$ ermittelt. Weiterhin sind ein Gierratensensor 26, ein Querbeschleunigungssensor 27, ein Längsbeschleunigungssensor und ein Lenkradwinkelsensor 29 mit der Regeleinheit 28 verbunden. Jedes Rad weist außerdem eine individuell ansteuerbare Radbremse 30 bis 33 auf. Diese Bremsen werden hydraulisch betrieben und empfangen unter Druck stehendes Hydraulikfluid über Hydraulikleitungen 34 bis 37. Der Bremsdruck wird über einen Ventilblock 38 eingestellt, wobei der Ventilblock von elektrischen Signalen fahrerunabhängig angesteuert wird, die in der elektronischen Regeleinheit 28 (Giermomenteneinheit) erzeugt werden. Über ein von einem Bremspedal 39 betätigten Hauptzylinder 1 kann von dem Fahrer Bremsdruck in die Hydraulikleitungen 34 bis 37 eingesteuert werden. In dem Hauptzylinder bzw. den Hydraulikleitungen ist ein Drucksensor 11 (Figur 2) vorgesehen, mittels denen der Fahrerbremswunsch erfaßt werden kann. Über eine Schnittstelle(CAN) ist die Regelung 28 mit einem Motorsteuergerät der Antriebseinheit verbunden.

Figur 2 zeigt eine Bremsanlage mit einem diagonal aufgeteilten Bremskreis. Die Bremsanlage besteht im Wesentlichen aus einem Bremspedal 39 mit zugeordnetem Bremslichtschalter (BLS), einem Bremskraftverstärker 4, einen Bremszylinder (Tandem-Hauptzylinder) 1 und einem Hydraulikfluidreservoir 3. Der Hauptzylinder 1 erzeugt auslassseitig einen Bremsdruck primär nach Massgabe des durch das Bremspedal 39 erzeugten Fahrerwunsches. Über Hydraulikleitungen 50, 51 wird dieser Bremsdruck dem Ventilblock 38 zugeführt. Ebenfalls mit dem Ventilblock 38 verbunden sind die Radbremsen 30, 31, 32, 33. Einer Radbremse 33 sind ein Einlassventil 7 und ein Auslassventil 9 zugeordnet. In der Regel sind das Einlassventil stromlos offen und das Auslassventil stromlos geschlossen. Einlassseitig empfängt das Einlassventil 7 unter Druck stehendes Hydraulikfluid von einer Druckquelle, beispielsweise dem Hauptzylinder 1. Außerdem ist eine Hydraulikpumpe 8 für die Radbremse 33 vorgesehen. In der gezeigten Ausführungsform fördert die Hydraulikpumpe ggf. unter Druck stehendes hydraulisches Fluid zur Einlassseite des Einlassventils 33. 8 bezeichnet den mechanischen Teil der Pumpe, beispielsweise eine im oder am Ventilblock vorgesehene Exzenterpumpe, 14 den elektrischen Antrieb, beispielsweise einen Elektromotor. Saugseitig ist die Pumpe 8, 14 allgemein mit einer Hydraulikfluidquelle verbunden. In der gezeigten Ausführungsform kann sie Hydraulikfluid vom Hauptzylinder beziehen.

Die Pumpe 8, 14 liegt zwischen einem saugseitigen Rückschlagventil 40 und einem auslassseitigen Rückschlagventil 41. Zwischen Auslass der Pumpe 8, 14 und primärer Druckquelle bzw. Hauptzylinder 1 befindet sich ein Trennventil 12, das beispielsweise dann geschlossen werden kann, wenn die Pumpe 8, 14 in Betrieb ist. Dadurch wird sichergestellt, dass das geförderte Fluid durch das Einlassventil 7 hindurch in die Radbremse 33 gelangt und nicht rückwärts in Richtung des THZ 1 strömt. 15 ist ein Niederdruckspeicher, der das über das Auslassventil 9 ausströmende Hydraulikfluid empfängt. 42 ist ein Rückschlagventil. Das Umschaltventil 13 ist in der Regel stromlos geschlossen, das Trennventil 12 in der Regel stromlos offen. Parallel zu ihm ist in einer Bypassleitung 5 ein Rückschlagventil 6 und ein Überdruckventil 43 geschaltet. Das Rückschlagventil 6 öffnet zur Radbremse 33. In der gezeigten Ausführungsform wirkt die Pumpe 8, 14 für zwei Radbremsen 33, 30. Allgemein kann gesagt werden, dass für jedes der Räder 15, 16, 20, 21 bzw. für jede Radbremse 30, 31, 32, 33 individuell Einlassventile 7, 44 und Auslassventile 9, 45 sowie Rückschlagventile 46, 47 vorgesehen sind. Hinsichtlich den Ventilen 12, 13 ist die Bremsanlage so ausgelegt, dass sie jeweils für ein Paar von Radbremsen 33, 30 eines diagonal aufgeteilten Bremskreises vorgesehen sind. In der Ausführungsform der Fig. 2 bedient die Pumpe 8, 14 die Radbremse 33 (Figur1) für die rechte Vorderachse und die Radbremse 30 für die linke Hinterachse. Da der zweite Bremskreis für die Radbremsen 31, 32 identisch aufgebaut und mit der Hydraulikleitung 51 verbunden ist, kann auf eine Beschreibung verzichtet werden. 48 ist ein Ausgleichsbehälter und 49 eine Druckdrossel.

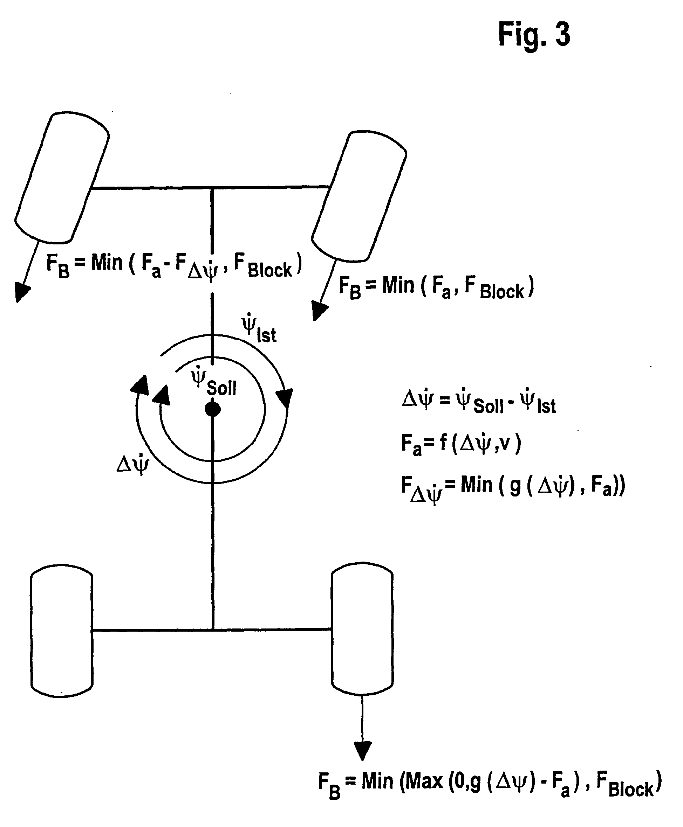

Die Einrichtung nach der Erfindung verzichtet in der Regel auf den Druckaufbau an der Hinterachse und setzt das benötigte Giermoment alleine durch eine Druckschere an der Vorderachse um. Dabei wird der Druck aktiv mit Hilfe einer reinen Umschalt-/Trennventil-Regelung (ETR Regelung) bis zum Blockierdruckniveau aufgebaut. Wesentliches Kennzeichen einer ETR Regelung ist, dass der Bremsdruck über eine graduelle Regelung der Pumpe 8, 14 in dem Bremskreis eingestellt wird. Die Bremsdruckanforderung wird folglich in der Radbremse 33 des rechten Vorderrades nach Massgabe der Ansteuerung des Antriebs 14 auf $P_{Soll}$ eingestellt. Damit ist das Einlassventil 7 an der Vorderachse immer geöffnet, was ein Einbremsen in die Vorderachse auch bei defektem Blinklichtschalter und Drucksensor 11 ermöglicht. Das Einlassventil 44 an der Radbremse 30 der Hinterachse ist dabei geschlossen. Die Solldrücke $P_{Soll}$ an der Vorderachse berechnen sich aus den Bremskraftanforderungen $F_\alpha$ eines unterlagerten Regelkreises 56, der eine Fahrzeugverzögerung $\alpha_{Soll}$ in Abhängigkeit von der Regelabweichung $\Delta\dot{\psi}$ und der Fahrzeuggeschwindigkeit $\nu$ ermittelt, sowie aus einem Offset $F_{\Delta\dot{\psi}}$ der vom kurvenäußeren Vorderrad abgezogen wird (Figur 3) .

Die Fahrzeugverzögerung $\alpha_{Soll}$ wird vorzugsweise nach der Beziehung $\alpha_{Soll}$ = f{$\nu$, $\Delta\dot{\psi}$, $\alpha_{quer}$, $\delta$} ermittelt. Die erforderliche Bremskraft, errechnet sich aus

$$F_a = \mathrm{f}\left\{\, a_{Ist}, a_{Soll}, \frac{d(a_{Ist} - a_{Soll})}{dt} \nu, \Delta\psi, a_{quer}, \delta \,\right\}$$

mit $\alpha_{Ist}$ = aus den Signalen der Raddrehzahlsensoren und optional eines Längsbeschleunigungssensors ermittelte Fahrzeugverzögerung, $m$ = Fahrzeugmasse.

Eine Erweiterung dieser Logik besteht darin, doch einen Druckaufbau am kurveninneren Hinterrad vorzunehmen, wenn das am kurvenäußeren Vorderrad geforderte Solldruckniveau null bar beträgt, da auch in diesem Fall das Einbremsen an mindestens zwei Rädern (ein Vorder-, ein Hinterrad) möglich ist, weil auch in diesem Fall die beiden Eingriffsräder in unterschiedlichen Diagonalen liegen und damit die Drücke mit einer Umschaltventil/Trennventil Regelung (ETR) eingestellt werden können. Der Sollbremskraft am kurvenäußeren Vorderrad wird dabei dann null, wenn $F_\alpha$ kleiner als $F_{\Delta\dot{\psi}}$ wird oder wenn $F_\alpha$ am kurveninneren Vorderrad die maximal übertragbare Längskraft $F_{Block}$ überschreitet ($F_{Block} < F_{\Delta\dot{\psi}}$). Dabei berechnet sich die Bremskraftanforderung am kurveninneren Hinterrad aus der Differenz zwischen $F_{Block}$ und $F_{\Delta\dot{\psi}}$, d.h. dem Anteil der Bremskraftschere, der nicht an der Vorderachse umgesetzt werden konnte. Der Eingriff am Hinterrad kann dabei abhängig von der Zielsetzung (mehr Stabilität oder mehr Drehfreudigkeit) auf den ABS-Sollschlupf begrenzt sein oder nicht.

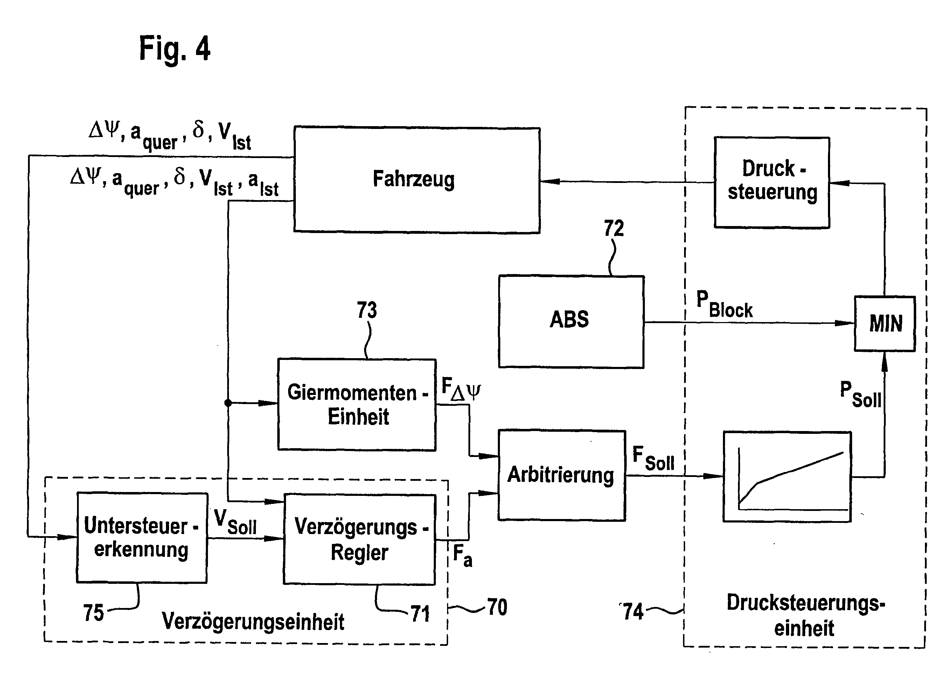

Figur 4 zeigt schematisch ein Blockdiagramm des unterlagerten Regelkreises 56. Der Regelkreis weist folgende Einheiten auf:

Eine Verzögerungseinheit 70 mit einer Untersteuer-Erkennung 75, die abhängig von der Regelabweichung und Fahrzeuggeschwindigkeit eine Verzögerungsanforderung generiert, die ein Verzögerungsregler 71 mit Hilfe von Bremskraftanforderungen $F_a$ an der Vorderachse versucht umzusetzen (Verzögerung maximal bis zum Blockierdruck der Vorderräder, bei dem die ABS Regelung 72 aktiv eingreift, möglich) .

Eine Giermomenteneinheit 73, die abhängig von der Regelabweichung das benötigte Giermoment berechnet, das dann durch den Aufbau einer Bremskraftdifferenz $F_{\Delta\dot{\psi}}$ zwischen beiden Vorderrädern erzeugt wird.

Eine Bremsdrucksteuerungseinheit 74, die die Bremskraftsollanforderungen $F_{Soll}$ entsprechend in Bremsdrücke umsetzt

## Patentansprüche

1.  Fahrzeugstabilisierende Einrichtung zum Einstellen oder Modifizieren von Bremsdrücken in den Radbremsen einer Bremsanlage mit

    - einer Untersteuererkennung (75) zum Ermitteln eines Untersteuer-Fahrzustandes,
    - einer Einrichtung (71) zum Berechnen einer Fahrzeugsollverzögerung $a_{soll}$ und daraus abgeleitet einer Soll-Bremskraft $F_{soll}$ oder eines Soll-Bremsdrucks $p_{soll}$ in Abhängigkeit von dem Untersteuer-Fahrzustand,
    - einer Giermomenten-Einheit (73), die in Abhängigkeit von einer Regelabweichung $\Delta\dot{\Psi}$ ein benötigtes Giermoment berechnet,
    **dadurch gekennzeichnet, dass**
    - die Soll-Bremskräfte an den Radbremsen der Vorderachse in Abhängigkeit der Fahrzeugsollverzögerung $a_{soll}$ gebildet werden und an dem kurvenäußeren Rad der Vorderachse eine das benötigte Giermoment erzeugende und den Untersteuer-Fahrzustand korrigierende Differenzbremskraft zu dem kurveninneren Rad der Vorderachse eingestellt wird,
    - wobei gegebenenfalls an dem kurveninneren Hinterrad das restliche benötigte Giermoment umgesetzt wird.

2.  Fahrstabilisierende Einrichtung nach Anspruch 1,
    **dadurch gekennzeichnet, dass** eine Bremsdrucksteuerung (74) vorgesehen ist, die in Abhängigkeit von der Differenzbremskraft Signale für eine ein Giermoment des Fahrzeugs bewirkende Druckanforderung nach einem Druckaufbau und Druckabbau der Bremsdrücke an der Vorderachse generiert und die Steuerbefehle an die Aktuatoren abgibt.

**3.** Fahrstabilisierende Einrichtung nach Anspruch 1 oder 2, **dadurch gekennzeichnet, dass** die die Differenzbremskraft bewirkenden Soll-Bremskräfte in Abhängigkeit von der Fahrzeugsollverzögerung $\alpha_{Soll}$ und einem Offset $F_{\Delta\dot{\psi}}$ gebildet werden.

**4.** Fahrstabilisierende Einrichtung nach einem der Ansprüche 1 bis 3, **dadurch gekennzeichnet, dass** die Fahrzeugsollverzögerung $\alpha_{Soll}$ in Abhängigkeit von der Regelabweichung $\Delta\dot{\psi}$ und der Fahrzeuggeschwindigkeit $\nu$ ermittelt wird.

**5.** Fahrstabilisierende Einrichtung nach einem der Ansprüche 1 bis 4, **dadurch gekennzeichnet, dass** die Soll-Bremskraft an dem kurveninneren Vorderrad nach der Beziehung $F_{Soll} = \alpha_{Soll}$ f $\{\Delta\dot{\psi}, \nu, \alpha_{quer}, \delta\}$ gebildet wird, mit : $v$ = Fahrzeuggeschwindigkeit, $\alpha_{quer}$ = Querbeschleunigung, $\delta$ = Lenkradwinkel bzw. Lenkwinkel

**6.** Fahrstabilisierende Einrichtung nach einem der Ansprüche 1 bis 5, **dadurch gekennzeichnet, dass** die Soll-Bremskraft an dem kurvenäusseren Vorderrad nach der Beziehung $F_{Soll} = \alpha_{Soll}$ f$\{\Delta\dot{\psi}, \nu, \alpha_{quer}, \delta\}$ - F$_{\Delta\dot{\psi}}$ gebildet wird, mit : $^\vee$ = Fahrzeuggeschwindigkeit, $\alpha_{quer}$ = Querbeschleunigung, $\delta$ = Lenkradwinkel bzw. Lenkwinkel, $F_{\Delta\dot{\psi}}$ = Bremskraftdifferenzwert zwischen den Radbremsen der Vorderachse

**7.** Fahrstabilisierende Einrichtung nach einem der Ansprüche 1 bis 6, **dadurch gekennzeichnet, dass** eine Druckanforderung für den Druckaufbau am kurveninneren Vorderrad auf einen oberen Wert begrenzt wird, dem ein maximaler Schlupfbereich zugeordnet ist, bei dem die ABS Regelung aktiviert wird.

**8.** Fahrstabilisierende Einrichtung nach einem der Ansprüche 1 bis 7, **dadurch gekennzeichnet, dass** ein Druckaufbau am kurveninneren Hinterrad nach Maßgabe eines Untersteuerregelbremsdruckes erfolgt, wenn die Druckanforderung für den Druckaufbau am kurvenäußeren Vorderrad 0 bar beträgt.

**9.** Fahrstabilisierende Einrichtung nach einem der Ansprüche 1 bis 8, **dadurch gekennzeichnet, dass** bei einer Bremsanlage mit diagonal aufgeteilten Bremskreisen die Soll-Bremsdrücke über eine Ansteuerung des Umschalt- und/oder Trennventile in die Radbremsen eingesteuert werden.

**Claims**

**1.** Vehicle stabilizing device for setting or modifying brake pressures in the wheel brakes of a brake system with

- an understeering detection device (75) for determining an understeering drive condition,
- a device (71) for calculating a vehicle nominal deceleration $a_{nom}$ and, derived therefrom, a nominal brake force $F_{nom}$ depending on the understeer drive condition,
- a yaw torque unit (73) calculating a yaw torque required depending on a control deviation $\Delta\dot{\psi}$,

**characterized in that**

- the nominal brake forces at the wheel brakes of the front axle are produced depending on the vehicle nominal deceleration $a_{nom}$, and, at the outside wheel in a turn of the front axle, a differential brake force producing the required yaw torque and correcting the understeering drive condition is set in relation to the inside wheel in a turn of the front axle,
- and the remaining required yaw torque is realized, in case of need, at the inside rear wheel in a turn.

**2.** Vehicle stabilizing device as claimed in claim 1, **characterized in that** brake pressure control (74) is provided which, as a function of the differential brake force, generates signals for a pressure requirement effecting a yaw torque of the vehicle after pressure increase and pressure decrease of the brake pressures at the front axle and which transmits control commands to the actuators.

**3.** Vehicle stabilizing device as claimed in claim 1 or 2, **characterized in that** the nominal brake forces effecting the differential brake force are produced depending on the vehicle nominal deceleration $a_{nom}$ and an offset $F_{\Delta\dot{\psi}}$.

**4.** Vehicle stabilizing device as claimed in any one of claims 1 to 3,
**characterized in that** the vehicle nominal deceleration $a_{nom}$ is determined depending on the control deviation $F_{\Delta\dot\psi}$ and the vehicle speed v.

**5.** Vehicle stabilizing device as claimed in any one of claims 1 to 4,
**characterized in that** the nominal brake force at the inside front wheel in a turn is produced according to the relation $F_{nom} = \alpha_{nom}$ f$\{\Delta\dot\psi,$ v, $\alpha_{lat},$ $\delta,\}$ wherein v = vehicle speed, $a_{lat}$ = lateral acceleration, $\delta$ = steering wheel angle or steering angle.

**6.** Vehicle stabilizing device as claimed in any one of claims 1 to 5,
**characterized in that** the nominal brake force at the outside front wheel in a turn is produced according to the relation $F_{nom} = \alpha_{nom}$ f$\{\Delta\dot\psi,$ v, $\alpha_{lat},$ $\delta\}$ - $F_{\Delta\dot\psi}$, wherein v = vehicle speed, $a_{lat}$ = lateral acceleration, $\delta$ = steering wheel angle or steering angle, $F_{\Delta\dot\psi}$ = brake force differential value between the wheel brakes of the front axle.

**7.** Vehicle stabilizing device as claimed in any one of claims 1 to 6,
**characterized in that** a pressure requirement for the pressure increase at the inside front wheel in a turn is limited to a top value, assigned to which is a maximum slip range in which the ABS control is activated.

**8.** Vehicle stabilizing device as claimed in any one of claims 1 to 7,
**characterized in that** pressure increase at the inside rear wheel in a turn is carried out according to an understeering control brake pressure when the pressure requirement for the pressure increase at the outside front wheel in a turn amounts to zero bar.

**9.** Vehicle stabilizing device as claimed in any one of claims 1 to 8,
**characterized in that** in a brake system with a diagonal split-up of brake circuits, the nominal brake pressures are introduced into the wheel brakes by way of actuating the change-over and/or separating valves.

**Revendications**

**1.** Dispositif de stabilisation de véhicule pour régler ou modifier des pressions de freinage dans les freins de roue d'un système de freinage comportant

- une reconnaissance de sous-virage (75) pour déterminer un état de conduite de sous-virage,
- un dispositif (71) pour calculer un ralentissement de consigne de véhicule $a_{soll}$ et, dérivée de celui-ci, une force de freinage de consigne $S_{soll}$ ou une pression de freinage de consigne $p_{soll}$ en fonction de l'état de conduite de sous-virage,
- une unité de moment d'embardée (73) qui calcule un moment d'embardée nécessaire en fonction d'un écart de régulation $\Delta\dot\Psi$,

**caractérisé en ce que**

- les forces de freinage de consigne sur les freins de roue de l'essieu avant sont formées en fonction du ralentissement de consigne de véhicule $a_{soll}$ et, sur la roue de l'essieu avant côté extérieur de la courbe, une force de freinage différentielle par rapport à la roue de l'essieu avant côté intérieur de la courbe, générant le moment d'embardée nécessaire et corrigeant l'état de conduite de sous-virage, est réglée,
- le moment d'embardée nécessaire restant étant le cas échéant transféré à la roue arrière côté intérieur de la courbe.

**2.** Dispositif de stabilisation de conduite selon la revendication 1, **caractérisé en ce qu'**il est prévu une commande de pression de freinage (74) qui génère, en fonction de la force de freinage différentielle, des signaux pour une demande de pression, provoquant un moment d'embardée du véhicule, après une montée en pression et une réduction de pression des pressions de freinage sur l'essieu avant et délivre les instructions de commande aux actionneurs.

**3.** Dispositif de stabilisation de conduite selon la revendication 1 ou 2, **caractérisé en ce que** les forces de freinage de consigne, provoquant la force de freinage différentielle, sont formées en fonction du ralentissement de consigne de véhicule $a_{soll}$ et d'un offset $F_{\Delta\dot\psi}$.

4. Dispositif de stabilisation de conduite selon l'une des revendications 1 à 3, **caractérisé en ce que** le ralentissement de consigne de véhicule $a_{soll}$ est déterminé en fonction de l'écart de régulation $\Delta\dot{\Psi}$ et de la vitesse de véhicule v.

5. Dispositif de stabilisation de conduite selon l'une des revendications 1 à 4, **caractérisé en ce que** la force de freinage de consigne sur la roue avant côté intérieur de la courbe est formée selon la relation $F_{Soll} = a_{Soll} f\{\Delta\dot{\Psi}, v, a_{quer}, \delta\}$ avec :
$v$ = vitesse du véhicule, $a_{quer}$ = accélération transversale,
$\delta$ = angle du volant ou angle de braquage.

6. Dispositif de stabilisation de conduite selon l'une des revendications 1 à 5, **caractérisé en ce que** la force de freinage de consigne sur la roue avant côté extérieur de la courbe est formée selon la relation $F_{soll} = a_{soll} f\{\Delta\dot{\Psi}, v, a_{quer}, \delta\} - F_{\Delta\dot{\psi}}$, avec :
$v$ = vitesse du véhicule, $a_{quer}$ = accélération transversale,
$\delta$ = angle du volant ou angle de braquage
$F_{\Delta\dot{\psi}}$ = valeur différentielle de la force de freinage entre les freins de roue de l'essieu avant. ,

7. Dispositif de stabilisation de conduite selon l'une des revendications 1 à 6, **caractérisé en ce qu'**une demande de pression pour la montée en pression sur la roue avant côté intérieur de la courbe est limitée à une valeur supérieure à laquelle est associé un domaine de patinage maximal pour lequel est activée la régulation ABS.

8. Dispositif de stabilisation de conduite selon l'une des revendications 1 à 7, **caractérisé en ce qu'**une montée en pression sur la roue arrière côté intérieur de la courbe s'effectue en fonction d'une pression de freinage de régulation de sous-virage lorsque la demande de pression pour la montée en pression sur la roue avant côté extérieur de la courbe est égale à 0 bar.

9. Dispositif de stabilisation de conduite selon l'une des revendications 1 à 8, **caractérisé en ce que**, dans le cas d'un système de freinage avec circuits de freinage répartis en diagonale, les pressions de freinage de consigne sont introduites dans les freins de roue à travers une commande de la soupape de commutation et/ou des soupapes de séparation.

# Fig. 1

**Fig. 2**

# Fig. 3

$F_B = Min ( F_a - F_{\Delta\dot\psi} , F_{Block} )$

$F_B = Min ( F_a , F_{Block} )$

$\dot\psi_{Ist}$

$\dot\psi_{Soll}$

$\Delta\dot\psi$

$\Delta\dot\psi = \dot\psi_{Soll} - \dot\psi_{Ist}$

$F_a = f ( \Delta\dot\psi , v )$

$F_{\Delta\dot\psi} = Min ( g ( \Delta\dot\psi ) , F_a ))$

$F_B = Min (Max (0, g ( \Delta\psi ) - F_a ) , F_{Block} )$

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19619476 A1

- DE 19919841